Europäisches Patentamt

European Patent Office

Office européen des brevets

(11) Publication number: **0 480 297 A1**

# EUROPEAN PATENT APPLICATION

(21) Application number: **91116824.3**

(22) Date of filing: **02.10.91**

(51) Int. Cl.5: **C09B 61/00**, **A23L 1/275**

(30) Priority: **11.10.90 TR 929/90**

(43) Date of publication of application:
**15.04.92 Bulletin 92/16**

(84) Designated Contracting States:
**DE GB**

(71) Applicant: **Canbas, Ahmet, Prof. Dr.**
**Cukurova Üniversitesi, Camlitepe Lojmanlari**
**No. 141/01330**
**Adana(TR)**

(72) Inventor: **Canbas, Ahmet, Prof. Dr.**
**Cukurova Üniversitesi, Camlitepe Lojmanlari**
**No. 141/01330**
**Adana(TR)**

(74) Representative: **LOUIS, PÖHLAU, LOHRENTZ &**
**SEGETH**
**Kesslerplatz 1 Postfach 3055**
**W-8500 Nürnberg-1(DE)**

(54) Recovery of anthocyanins from black carrot for their use as foodstoffcolorants.

(57) This invention relates to colorants suitable for use in food products obtained form black carrot in the form of powder by means of extraction.

This invention relates to colorants suitable for use in foodstuffs obtained from black carrot by means of extraction.

The color of the foodstuffs is one of the most important criteria for consumer's choice of a specific brand. A good color attracts consumers and on the other hand gives implications about the other qualities of the product. One of the important principles in the food industry is to obtain a product with a suitable and attractive color. When the natural color of the foodstuffs is insufficient and unlikeable, colorant is added taking the nature of the product into consideration. There are national and international codes for food colorants.

The food colorants are either synthetic dyes or natural pigments. The artificial namely synthetic colorants are not preferable because they are considered as harmful to human health. Consequently, use some of the artificial colorants have been restricted and some drawbacks of them have been widely discussed. Therefore, there is a growing need for natural food colorants.

The natural food colorants are obtained through extraction from vegetables or animals. Anthocyanins namely red pigments, are considered very essential as food colorants and classified as E 163 according to the colorants code.

Anthocyanins may be found in red, blue or purple flowers, fruits or vegetables and are very wide in nature.

The most important source of anthocyanin is grapes. The anthocyanins are present mostly in the skin of the grapes. Since the use of grapes only for obtaining anthocyanins is not economical, wastes of wine and grape juice production are used for such extraction.

Apart form grapes, blackberries, rasberries, strawberries, various fruits, red cabbage, beetroots and some flowers have been considered as potential anthocyanin sources however actual use of these have not been possible due to economical and technological reasons. Therefore, the main anthocyanin source is grape skins for the time being.

Black carrot is being used for extraction of juice which is a very common beverage in Cukurova region in Turkey. The black carrot is available for at least ten months of the year, as there is no specific seed time for it and the storage is quite easy.

The above mentioned facts provide the black carrot as advantageous over the grapes. On the other hand, the pigments are spreaded throughout the black carrot and are comparatively more than the ones in grapes.

Therefore it is an objective of this present invention to use black carrot as the source of anthocyanin instead of grapes.

It is a further object of this present invention is to provide a process for extracting anthocyanins form black carrot to be used as food colorant.

The foregoing objects are achieved in accordance with the present invention by providing a method of producing an anthocyanin colorant from black carrot which comprises; the extraction of the anthocyanins form the black carrots; separating the anthocyanins from the extract ; concentrating the isolated anthocyanins and evaporating the same.

In accordance with the present invention, the washed and sliced carrots are put into the extraction vessels and a solvent including 500 mg\l sulphur dioxide is used for extraction.

Sulphur dioxide solvent prepared as 250 l per 100 kg is added to the vessel and extraction is carried out in various stages.

In the experiments, the extraction was conducted in five stages, each of which lasted for 12 hours. The first extraction product was obtained on the third day and 13 different products were obtained at the end of ninth day. The maximum amount obtained in the third batch was 1000 mg\l and the minimum amount was 100 mg\l after the ninth product. These results showed that a term of seven days is enough for extraction.

All the liquids obtained from extraction are mixed together and collected in a container.

The remaining colorless carrots may be used as animal food. The sulphur dioxide was used with various concentration in industrial applications. Methyl alcohol and ethyl alcohol may also be used for the same purpose. In the second stage, the anthocyanins are removed from the mixture by means of adsorption. A material capable of adsorption must be present and a solvent for dissolving the collected pigments is required.

In the similar applications, the use of polyvinylpyrrolidine (pvp), talk powder, ion exchanger resins are known.

However, ion exchanger resins have some drawbacks because of their synthetic nature. Tonsils, a whitening material used in oil industry, has been used as adsorbent for the anthocyanins and has been proved to be a very successful adsorbent.

For the eluting of the anthocyanins, ethyl alcohol solvent (50°) has been used.

The pH degree of the solvent was 3.5 - 3.7 and it is regulated by adding citric acid. Following the extraction, the mixture is filtered and tonsils 10% (v\w) is added to the solution.

Tonsils is kept in the solution for 12 hours and is stirred from time to time for a homogeneous dispersion. At the end of 12 hours, tonsils is settled and the solution is separated from the vessel. The remaining tonsils is rinsed with water and this ensures the removal of various water soluble materials following the eluting. The tonsils is left for

settling down and the solution in the vessel is taken out.

The absorbed anthocyanin solution is then eluted from the adsorbent with ethyl alcohol five times as much of the tonsils. Tonsils is left in this solvent for 24 hours and is stirred from time to time. At the end of 24 hours the solvent is replaced with the new one and this is repeated for four times.

The obtained extracts containing alcohol are mixed together and is filtered to separate any tonsils remaining. In the third stage the extract is inspissated and evaporated.

As known, the technological value of the anthocyanins which are used as colorants are evaluated by their physical properties not with their chemical compositions. Therefore, the pigment\dry material ratio is preferably high within the extract which is to be used as colorant. In order to increase this ratio, the anthocyanin extract is first inspissated under vacuum at a temperature below 60° in an evaporator. Until the dry material amount is 10% of the whole amount. The ethyl alcohol content of the liquid which is removed from the evaporator is considerably high. Therefore it is used again for eluting.

The obtained extract is kept in dark and hermetically sealed glass jars at low temperatures and and may be used as food colorant. To obtain a pure and lasting colorant, the anthocyanin is dried and kept in powder form. In the experiments, the anthocyanin extract was dried in spray drier at 170° C. The temperature of the air leaving the drier was 100-110° C and the product feeding speed was 15-20 ml\min and the drier's speed was 11.000 cycle\min.

The extract recovered in powder form is kept in plastic or glass jars and sealed under vacuum. The anthocyanin amount in the powder extract was 70 g\kg.

The colorant recovered as described above has been used in foodstuffs having a pH degree under 4.4.

The food products had a nice and bright red color, their taste and smell has not changed and color has been stable over a period of 12 months.

## Claims

1. A method of producing anthocyanins as natural food colorants from black carrots.

2. A method of producing anthocyanins in accordance with claim 1 characterized in that the said anthocyanins are obtained form black carrots by means of extraction, eluting and evaporation.

3. A method of producing anthocyanins in accordance with claim 2 characterized in that the said extraction is realized by using sulphur dioxide solvent of 500 mg\SO2.

4. A method of producing anthocyanins as natural food colorants from black carrots in accordance with claim 2 and 3 characterized in that the said anthocyanins are separated by using tonsils as adsorbtion medium.

5. A method of producing anthocyanins as natural food colorants from black carrots in accordance with claim 2 to 4 characterized in that the adsorbed anthocyanins are eluded by using ethyl alcohol (60°) 3.5-3.7.

6. A method of producing anthocyanins as natural food colorants from black carrots in accordance with claims 2 to characterized in that the inspissated extract which contains alcohol is carried out under vacuum.

7. A method of producing anthocyanins as natural food colorants from black carrots in accordance with claims 2 to 6 characterized in that the inspissated anthocyanin extract is evaporated and produced in powder form.

8. A method of producing anthocyanins as natural food colorants from black carrots in accordance with claims 1 to 7 characterized in that the anthocyanin product is the form of powder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DOGA BILIM DERGISI, SERI D2 vol. 9, no. 3, 1985, ANKARA, TURKEY pages 394 - 398; CANBAS, A.: 'Study on the pigment of black carrot' * page 394, french abstract * * figure 1; table 1 * | 1,2 | C09B61/00 A23L1/275 |
| X | BIOCHEMICAL SYSTEMATICS AND ECOLOGY vol. 4, no. 1, 30 April 1976, ENGLAND pages 31 - 35; HARBORNE, JEFFREY B.: 'A unic pattern of anthocyanins in daucus carota and other umbelliferae' * the whole document * | 1,2 | |
| A | EP-A-0 096 481 (UNITED VINTNERS INC.) * page 1, line 26 - page 2, line 19 * * page 4, line 1 - line 13 * | 1-3 | |
| A | JOURNAL OF FOOD SCIENCE AND TECHNOLOGY (INDIA) vol. 26, no. 6, 1989, INDIA pages 327 - 328; BERRY S. K.; MANAN J. K.; JOSHI G.J.; SAXENA A. K.; KALRA C. L.: 'Preparation and evaluation of ready-to-serve (rts) black carrot beverage (kanji)' * the whole document * | 1 | TECHNICAL FIELDS SEARCHED (Int. Cl.5 )  A23L C09B |

-----

The present search report has been drawn up for all claims

| Place of search | Date of completion of the search | Examiner |
|---|---|---|
| THE HAGUE | 04 FEBRUARY 1992 | KETTERER M. |